# EUROPÄISCHE PATENTANMELDUNG

(11) **EP 3 893 066 A1**
(43) Veröffentlichungstag der Anmeldung: **13.10.2021**
(21) Anmeldenummer: 20168914.8
(22) Anmeldetag: 09.04.2020
(51) Int. Cl.: G05B 19/406

(54) **VERFAHREN UND VORRICHTUNG ZUM BETRIEB EINER MASCHINE MIT EINEM WERKZEUG**

(71) Anmelder: Siemens Aktiengesellschaft, 80333 München (DE)
(72) Erfinder: Butzerin, Andre, 6706 Bührs (AT); Schall, Daniel, 2020 Hollabrunn (AT); Trabesinger, Stefan, 8074 Raaba-Grambach (AT)
(74) Vertreter: Maier, Daniel Oliver

(57) **Zusammenfassung**

Verfahren zum Betrieb einer Maschine mit einem Werkzeug, wobei folgende Schritte ausgeführt werden:
a) Erfassen zumindest eines Betriebs-Datenpunktes (S1-S4) bezüglich der Maschine und/oder des Werkzeugs,
b) Berechnen zumindest eines Schätz-Werts (F1-F4) aus dem zumindest einen Betriebs-Datenpunkt (S1-S4) auf Basis eines ML-Modells,
c) Bestimmen einer Anomalie in Form eines zeitdiskreten Anomalie-Werts (AS) auf Basis des zumindest einen Schätz-Werts (F1-F4) durch einen Vergleich mit einem vorbestimmten Vergleichswert für die zumindest eine Schätzung und Erkennung einer Übereinstimmung des Schätz-Vergleichs,
d) Speichern des zeitdiskreten Anomalie-Werts (AS) in einem Speicher (MEM) und aggregieren des zeitlichen Verlaufs des Anomalie-Werts (AS) zu einem geglätteten Anomalie-Wert (SS),
e) Vergleichen des geglätteten Anomalie-Werts (SS) mit zumindest einem vorbestimmten Vergleichswert für die Anomalie und Erkennung einer Übereinstimmung des Anomalie-Vergleichs,
f) Ausgeben einer Steueroperation (O1-O4) auf Basis des geglätteten Anomalie-Werts (SS) an die Maschine.

## Beschreibung

Die Erfindung betrifft ein Verfahren und eine Vorrichtung zum Betrieb einer Maschine mit einem Werkzeug.

Die automatische Werkzeugbruchüberwachung (engl. "tool breakdown monitoring", TBM) ist eine wichtige Technologie der unbemannten Werkstätten und automatischen Produktionslinien für die CNC-Bearbeitung. Ein Werkzeugbruch kann zu einer Beschädigung des Werkzeugs beziehungsweise der Maschine und/oder des bearbeiteten Werkstücks und zu Ausfallzeiten der Maschine führen.

Aktuelle Lösungen berücksichtigen häufig Sensor-Daten von einer Werkzeugmaschine, wie Kraft- und Vibrationssensoren, und überwachen den Betrieb der Maschine schwellenwertbasiert, das heißt es erfolgt eine Überwachung von Minimum- und Maximum-Werten in den Signalen, wie eine Spindelleistung.

Dabei sind diese Lösungen häufig komplex und können Fehlalarme verursachen, da fest codierter Alarmgrenzen bestimmtes Betriebsverhalten nicht berücksichtigt werden. Ferner wird das Ausgeben Alarme nicht immer ausgelöst, auch wenn eine kritische Situation erreicht wird.

Durch eine falsche oder keine Alarmierung kann es zu einem unerwünschten Stillstand von Maschinen, aber auch zu Schäden an Maschine, Werkzeug oder Werkstück kommen.

Es ist Aufgabe der Erfindung ein Verfahren und eine Vorrichtung zur automatischen Überwachung einer Maschine mit einem Werkzeug bereitzustellen, wodurch ein Betrieb mit verbesserter Verfügbarkeit möglich ist.

Mit anderen Worten soll ein vorausschauender und vorgebender Betrieb einer Maschine mit einem Werkzeug ermöglicht werden. Unter einem vorbeugenden Betrieb wird die Fähigkeit verstanden, mit welcher ein Werkzeugbruch erkannt wird und der aktuelle Vorgang, wie beispielsweise Bohren oder Fräsen, angehalten wird, um Schäden am Werkstück zu vermeiden.

Dabei kann ein Stillstand der Maschinen auftreten, aber die Bearbeitung des Werkstücks kann mit einem neuen Werkzeug fortgesetzt werden.

Bei einem vorausschauenden Betrieb wird versucht, einen Werkzeugbruch rechtzeitig vorherzusagen, um Schäden am Werkstück und am Werkzeug zu vermeiden.

Ein Stillstand der Maschinen kann auftreten, aber die Werkstückbearbeitung kann mit demselben oder einem neuen Werkzeug fortgesetzt werden.

Bei einem vorgebenden Betrieb soll ein Werkzeugbruch rechtzeitig vorhergesagt werden und Gegenmaßnahmen ergriffen werden, um Werkzeugbruch und einen Stillstand der Maschinen zu vermeiden.

Die erfindungsgemäße Aufgabe wird durch ein Verfahren eingangs genannter Art gelöst, wobei folgende Schritte ausgeführt werden:
a) Erfassen zumindest eines Betriebs-Datenpunktes bezüglich der Maschine und/oder des Werkzeugs,
b) Berechnen zumindest eines Schätz-Werts aus dem zumindest einen Betriebs-Datenpunkt auf Basis eines ML-Modells,
c) Bestimmen einer Anomalie in Form eines zeitdiskreten Anomalie-Werts auf Basis des zumindest einen Schätz-Werts durch einen Vergleich mit einem vorbestimmten Vergleichswert für die zumindest eine Schätzung und Erkennung einer Übereinstimmung des Schätz-Vergleichs,
d) Speichern des zeitdiskreten Anomalie-Werts in einem Speicher und aggregieren des zeitlichen Verlaufs des Anomalie-Werts zu einem geglätteten Anomalie-Wert,
e) Vergleichen des geglätteten Anomalie-Werts mit zumindest einem vorbestimmten Vergleichswert für die Anomalie und Erkennung einer Übereinstimmung des Anomalie-Vergleichs,
f) Ausgeben einer Steueroperation auf Basis des geglätteten Anomalie-Werts an die Maschine.

In der Statistik ist eine Anomalie (auch "Ausreißer") eine Beobachtung oder ein Ereignis, das so stark von anderen Ereignissen abweicht, dass der Verdacht geweckt wird, dass es durch einen anderen Mittelwert erzeugt wurde.

Anomalien in einem großen Datensatz können sehr komplizierten Mustern folgen, die in den meisten Fällen nur schwer zu erkennen sind.

Durch die Erfindung wird erreicht, dass ein vorausschauender und vorgebender Betrieb einer Maschine mit einem Werkzeug bei einer hohen Verfügbarkeit erfolgen kann.

In einer Weiterbildung der Erfindung ist es vorgesehen, dass zumindest zwei Betriebs-Datenpunkte erfasst und weiterverarbeitet werden.

Dadurch kann der Betrieb der Maschine genauer überwacht werden.

In einer Weiterbildung der Erfindung ist es vorgesehen, dass zumindest zwei Schätz-Werte berechnet und weiterverarbeitet werden.

Dadurch können Anomalien auf eine redundante Weise erkannt werden.

In einer Weiterbildung der Erfindung ist es vorgesehen, dass der zumindest eine Betriebs-Datenpunkt eine Dreh- oder Verschiebe-Geschwindigkeit, ein Drehmoment, eine Stromaufnahme oder eine Temperatur ist.

Dadurch kann der Betrieb der Maschine genau und auf eine besonders einfache Weise überwacht werden.

In einer Weiterbildung der Erfindung ist es vorgesehen, dass der zumindest eine Schätz-Wert mittels eines LSTM-Netzwerks berechnet wird.

Dadurch können Anomalien auf einfache Weise erkannt werden.

In einer Weiterbildung der Erfindung ist es vorgesehen, dass der zeitdiskrete Anomalie-Wert mittels eines "isolation forest"-Algorithmus bestimmt wird.

Dadurch können Anomalien auf einfache und besonders effiziente Weise erkannt werden.

Ein Isolationswald (engl. "isolation forest") ist ein unbeaufsichtigter (engl. "unsupervised") Lernalgorithmus zur Erkennung von Anomalien, der auf dem Prinzip der Isolierung von Anomalien anstelle der gängigsten Techniken zur Profilierung normaler Punkte basiert.

Die gebräuchlichsten Techniken zur Erkennung von Anomalien basieren auf der Erstellung eines Profils für das, was "normal" ist: Anomalien werden als solche Instanzen im Datensatz gemeldet, die nicht dem normalen Profil entsprechen.

Isolation Forest verwendet einen anderen Ansatz: Anstatt zu versuchen, ein Modell für normale Instanzen zu erstellen, werden anomale Punkte im Dataset explizit isoliert. Der Hauptvorteil dieses Ansatzes besteht in der Möglichkeit, Abtasttechniken in einem Ausmaß zu nutzen, das für die profilbasierten Methoden nicht zulässig ist, wodurch ein sehr schneller Algorithmus mit geringem Speicherbedarf erstellt wird.

In einer Weiterbildung der Erfindung ist es vorgesehen, dass der geglätteten Anomalie-Wert durch Bilden eines zeitlichen Mittelwerts erfolgt.

Dadurch können Anomalien genau und auf einfache Weise erkannt werden.

In einer Weiterbildung der Erfindung ist es vorgesehen, dass der Vergleichswert im Schritt e) durch ein Verfahren ermittelt wird, welches auf dem maschinellen Lernen beruht, wie ein Entscheidungs-Baum, ein Bayes-Netzwerk, ein neuronales Netzwerk, eine Multi-Class-Support-Vector-Maschine oder eine k-Nearest-Neighbor-Klassifikation.

In einer Weiterbildung der Erfindung ist es vorgesehen, dass zumindest eine Betriebs-Kennzahl beim Vergleich im Schritt f) berücksichtigt werden.

Die erfindungsgemäße Aufgabe wird auch durch eine Vorrichtung eingangs genannter Art gelöst, umfassend

ein Sensor-Modul mit zumindest einem Sensor-Mittel zur Ausführung des Schritts a),
ein Schätz-Modul zur Ausführung des Schritts b),
ein Anomalie-Detektions-Modul zur Ausführung des Schritts c),
ein Speicher-Modul zum Speichern im Schritt d),
ein Entscheidungsmodul zur Ausführung des Schritts e), und ein Ausgangs-Modul zur Ausführung des Schritts f),
wobei die Vorrichtung dazu eingerichtet ist, das erfindungsgemäße Verfahren auszuführen.

In einer Weiterbildung der Erfindung ist es vorgesehen, dass ferner ein Hilfsdaten-Modul umfasst ist, welches bei der Ausführung des Schritts e) angewandt wird.

In einer Weiterbildung der Erfindung ist es vorgesehen, dass das Schätz-Modul, das Anomalie-Detektions-Modul, das Speicher-Modul und das Entscheidungsmodul auf einer Edge gelegen sind.

Dadurch wird erreicht, dass der Betrieb mit einer besonders hohen Verfügbarkeit überwacht werden kann, da ein lokaler Betrieb möglich ist.

Außerdem müssen keine Betriebsdaten in einer Cloud gespeichert werden, wodurch die Datensicherheit und die Privatsphäre verbessert werden.

Die Erfindung wird nachfolgend anhand eines in den beigeschlossenen Zeichnungen dargestellten Ausführungsbeispiels näher erläutert. In den Zeichnungen zeigt:
- Fig. 1: eine symbolische Darstellung einer Ausführungsbeispiels für das erfindungsgemäße Verfahren,
- Fig. 2: ein Beispiel für ein Flussdiagramm des Entscheidungs-Moduls nach der Fig. 1,
- Fig. 3: eine symbolische Darstellung eines Regelkreises,
- Fig. 4-5: Beispiele für zeitliche Darstellungen von Stromverläufen einer Maschine,
- Fig. 6-7: Beispiele für Darstellungen von Stromaufnahmen in Abhängigkeit einer Bohr-Tiefe,
- Fig. 8: ein Beispiel für eine Verschub-Geschwindigkeit in Abhängigkeit der Bohr-Tiefe.

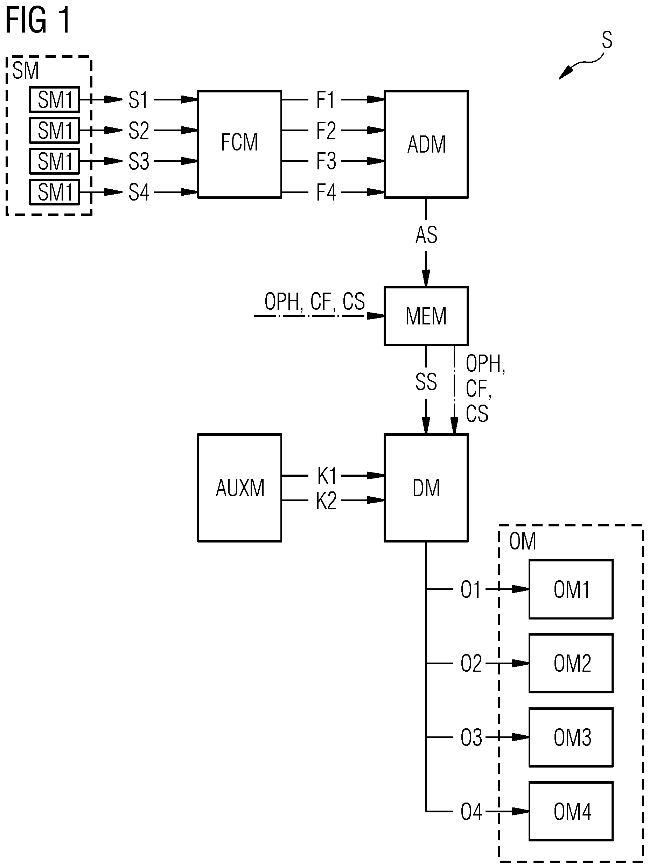

**Fig. 1** zeigt ein Ausführungsbeispiel der Erfindung in Form einer erfindungsgemäßen Vorrichtung, welche dazu eingerichtet ist, das erfindungsgemäße Verfahren auszuführen.

Das Verfahren weist folgende Schritte auf:
a) Erfassen zumindest eines Betriebs-Datenpunktes S1-S4 bezüglich der Maschine und/oder des Werkzeugs,
b) Berechnen zumindest eines Schätz-Werts F1-F4 aus dem zumindest einen Betriebs-Datenpunkt S1-S4 auf Basis eines ML-Modells,
c) Bestimmen einer Anomalie in Form eines zeitdiskreten Anomalie-Werts AS auf Basis des zumindest einen Schätz-Werts F1-F4 durch einen Vergleich mit einem vorbestimmten Vergleichswert für die zumindest eine Schätzung und Erkennung einer Übereinstimmung des Schätz-Vergleichs,
d) Speichern des zeitdiskreten Anomalie-Werts AS in einem Speicher und aggregieren des zeitlichen Verlaufs des Anomalie-Werts AS zu einem geglätteten Anomalie-Wert SS,
e) Vergleichen des geglätteten Anomalie-Werts SS mit zumindest einem vorbestimmten Vergleichswert für die Anomalie und Erkennung einer Übereinstimmung des Anomalie-Vergleichs,
f) Ausgeben einer Steueroperation O1-O4 auf Basis des geglätteten Anomalie-Werts SS an die Maschine.

Es ist besonders günstig, wenn zumindest zwei Betriebs-Datenpunkte S1-S4 erfasst und weiterverarbeitet werden, da die Erkennungswahrscheinlichkeit einer Anomalie-Erkennung dadurch steigt. So können beispielsweise mehrere Datenpunkte zu einer gemeinsamen Datenquelle aggregiert werden, welche einen neuen Datenpunkt bilden können.

In weiterer Folge ist es daher auch günstig, wenn zumindest zwei Schätz-Werte F1-F4 berechnet und weiterverarbeitet werden.

Ein Betriebs-Datenpunkt S1-S4 kann beispielsweise eine Dreh- oder Verschiebe-Geschwindigkeit, ein Drehmoment, eine Stromaufnahme oder eine Temperatur sein.

Die Schätz-Werte F1-F4 können beispielsweise mittels eines LSTM-Netzwerks berechnet werden.

Der zeitdiskrete Anomalie-Wert AS kann beispielsweise mittels eines "isolation forest"-Algorithmus berechnet werden.

Der geglätteten Anomalie-Wert SS kann beispielsweise durch Bilden eines zeitlichen Mittelwerts bestimmt werden.

Der Vergleichswert im Schritt e) kann beispielsweise durch ein Verfahren ermittelt werden, welches auf dem maschinellen Lernen beruht, wie ein Entscheidungs-Baum, ein Bayes-Netzwerk, ein neuronales Netzwerk, eine Multi-Class-Support-Vector-Maschine (SVM) oder eine k-Nearest-Neighbor-Klassifikation (kNN).

Ferner kann zumindest eine Betriebs-Kennzahl K1, K2 beim Vergleich im Schritt f) berücksichtigt werden.

Die Vorrichtung zum Betrieb einer Maschine mit einem Werkzeug umfasst
- ein Sensor-Modul SM mit zumindest einem Sensor-Mittel SM1-SM4 zur Ausführung des Schritts a),
- ein Schätz-Modul FCM zur Ausführung des Schritts b),
- ein Anomalie-Detektions-Modul ADM zur Ausführung des Schritts c),
- ein Speicher-Modul MEM Speichern im Schritt d),
- ein Entscheidungsmodul DM zur Ausführung des Schritts e), und ein Ausgangs-Modul OM1-OM4 zur Ausführung des Schritts f),
- ein Hilfsdaten-Modul AUXM, welches bei der Ausführung des Schritts zur Berücksichtigung der Betriebs-Kennzahlen K1, K2 angewandt wird.

Die Maschine ist zur besseren Übersicht nicht in der Figur dargestellt. Es ist klar, dass die Sensor-Mittel mit der Maschine entsprechend verbunden sind, um Sensordaten der Maschine zu erfassen.

Die Ausgabe-Module OM1-OM4 stellen den Betriebszustand der Maschine dar, liefern Informationen über nötige Wartungs- oder Reparaturarbeiten und können auch durch ein gemeinsames Ausgabe-Modul OM gebildet sein.

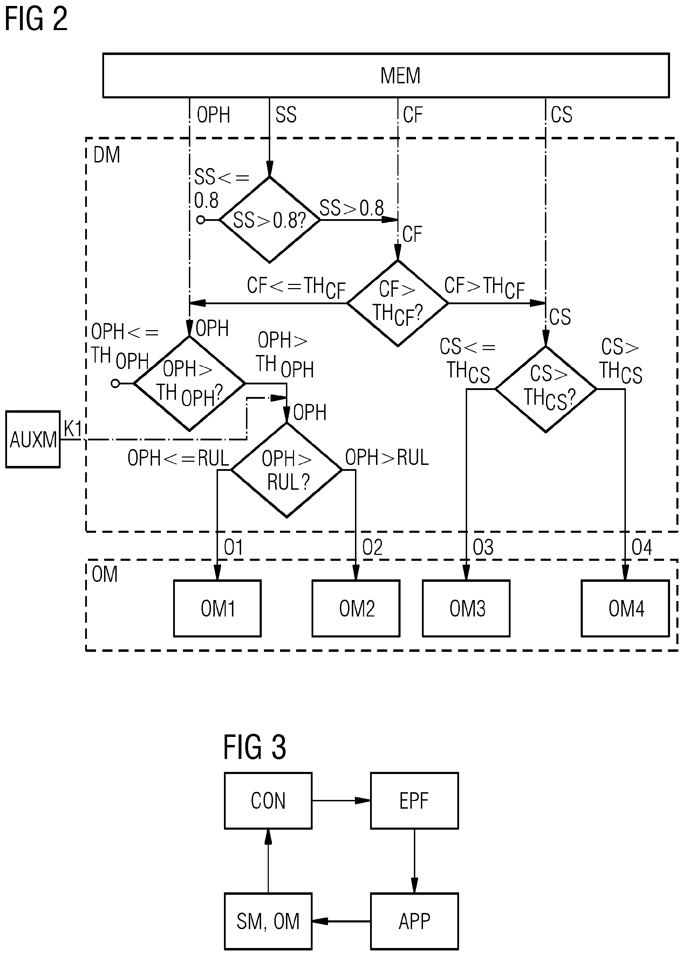

**Fig. 2** zeigt ein Beispiel für ein Flussdiagramm des Entscheidungsmoduls DM aus der vorhergehenden Figur.

Das Speicher-Modul stellt dem Entscheidungsmodul DM den geglätteten Anomalie-Wert SS bereit.

Es erfolgt eine Prüfung, ob der geglättete Anomalie-Wert SS innerhalb eines Wertebereichs liegt, also größer als der Randwert 0.8 ist, welcher einem ersten vorbestimmten Vergleichswert für die Anomalie entspricht.

Somit erfolgt eine Erkennung einer Übereinstimmung des Anomalie-Vergleichs.

Trifft dies nicht zu, liegt keine Anomalie vor und die Maschine kann weiter betrieben werden.

Wird der Randwert jedoch überschritten, so wird in weiterer Folge versucht, die Ursache der Anomalie genauer zu eruieren.

Dies erfolgt durch einen Abgleich mit Betriebskenngrößen.

Es wird geprüft, ob eine Schneide-Kraft CF (engl. "cutting force") unter einem vorgegebenen Schwellwert TH_{CF} liegt.

Falls ja, wird weiter geprüft, ob die maximal vorgesehenen Betriebsstunden OPH (engl. "operation hours") für die Maschine erreicht wurden, indem ein Vergleich mit einem vorgegebenen Schwellwert TH_{OPH} durchgeführt wird. Unter Berücksichtigung der Betriebs-Kennzahl K1, welche eine Rest-Betriebszeit RUL (engl. "Remaining Useful Lifetime") umfasst und vom Hilfsdaten-Modul AUXM bereitgestellt wird, erfolgt eine weitere Prüfung, ob die Betriebsstunden OPH noch innerhalb der Rest-Betriebszeit RUL liegt.

Die Kennzahl K1, K2 kann auch ein anderer, sog. "key performance indicator" KPI der Maschine sein.

Falls dies zutrifft, kann über das Ausgabe-Modul OM1 eine Ausgabe O1 "Prüfe Werkzeug-Aufnahme" erfolgen.

Anderenfalls kann über das Ausgabe-Modul OM2 eine Ausgabe O2 "Ersetze Werkzeug" erfolgen.

Falls die Prüfung der Schneide-Kraft CF über einem vorgegebenen Schwellwert TH_{CF} liegt, so wird weiter geprüft, ob eine Schneide-Geschwindigkeit CS unter einem vorgegebenen Schwellwert TH_{CS} liegt.

Falls dies zutrifft, kann über das Ausgabe-Modul OM3 eine Ausgabe O3 "Prüfe Schmierung" erfolgen.

Anderenfalls kann über das Ausgabe-Modul OM4 eine Ausgabe O4 "Prüfe CNC Programm/Modell" erfolgen.

Die Schneide-Kraft CF, die Schneide-Geschwindigkeit CS und die maximal vorgesehenen Betriebsstunden OPH kann beispielsweise über das Speicher-Modul MEM bereitgestellt werden, oder auch direkt von einem entsprechenden Sensor-Mittel SM1-SM4, welches jeweils mit der Maschine verbunden ist, bezogen werden.

**Fig. 3** zeigt ein Beispiel für einen Regelkreis der Maschine mit einer erfindungsgemäßen Vorrichtung.

Ein Kontrollsystem CON erfasst durch ein Sensor-Modul SM relevante Größen zur Erfassung verschiedener Betriebseigenschaften.

Das Kontrollsystem CON liefert diese Daten an eine Edge-Plattform EPF, in welcher die Auswertung der Betriebs-Datenpunkte S1-S4 mittels einem oder mehreren Anwendungsprogrammen APP erfolgt.

Mit anderen Worten sind das Schätz-Modul FCM, das Anomalie-Detektions-Modul ADM, das Speicher-Modul MEM und das Entscheidungsmodul DM auf der Edge-Plattform EPF gelegen.

Die Anwendungsprogramme APP umfassen Algorithmen, welche auf maschinellem Lernen beruhen, und steuern über das Ausgangsmodul OM die Maschine mittels entsprechender Aktuatoren oder Anzeigen an.

Dadurch wird eine Anordnung mit einem Regelkreis geschaffen, mit welchem der Betrieb der Maschine mit dem Werkzeug auf optimale Weise erfolgen kann.

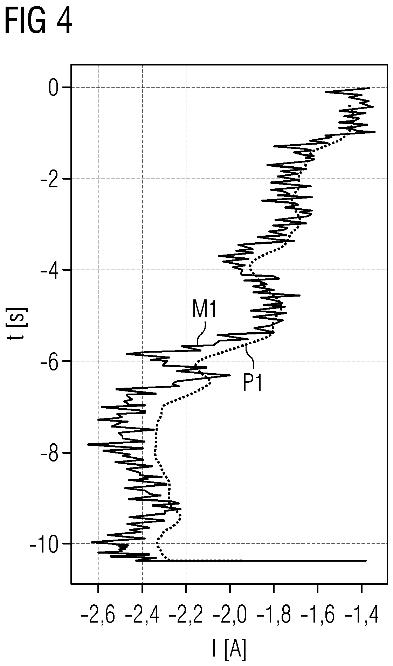

**Fig. 4** bis **Fig. 8** zeigen Beispiele für Betriebsnenngrößen, welche die Betriebs-Datenpunkte S1-S4 bilden können.

**Fig. 4** zeigt einen zeitlichen Verlauf einer Stromaufnahme der Maschine, in diesem Beispiel der Aufnahmestrom der Spindel einer CNC-Maschine.

In der Kurve M1 ist der gemessene Strom aufgetragen.

In der Kurve P1 ist der prognostizierte, geglättete Anomalie-Wert (engl. "smootheded score") zu erkennen, welcher ein Beispiel für den geglättete Anomalie-Wert SS gemäß den vorhergehenden Figuren bilden kann.

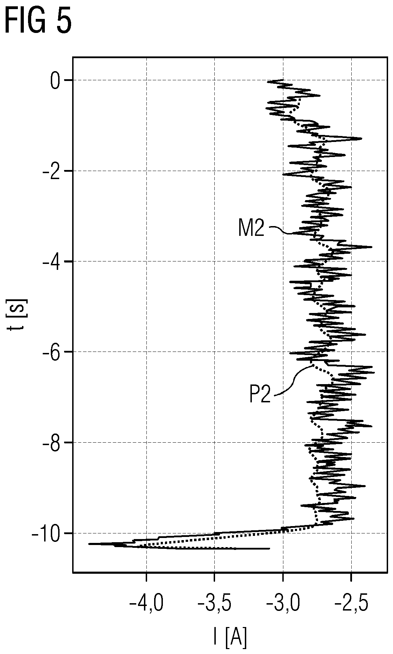

**Fig. 5** zeigt einen zeitlichen Verlauf einer weiteren Stromaufnahme der Maschine.

In der Kurve M2 ist der gemessene Strom aufgetragen.

In der Kurve P2 ist der geglättete Anomalie-Wert (engl. "smootheded score") zu erkennen, welcher wiederum ein Beispiel für den geglättete Anomalie-Wert SS gemäß den vorhergehenden Figuren bilden kann.

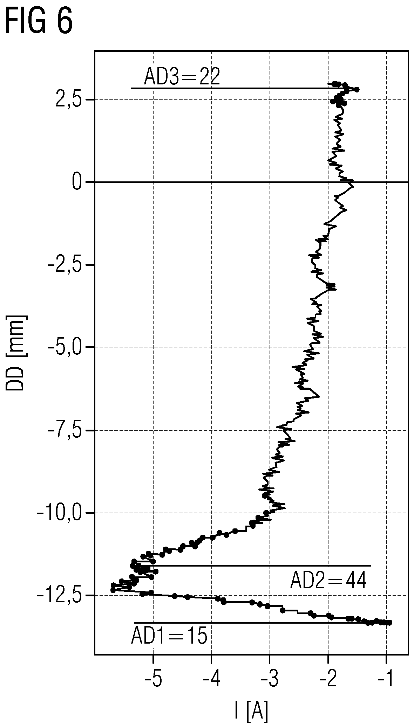

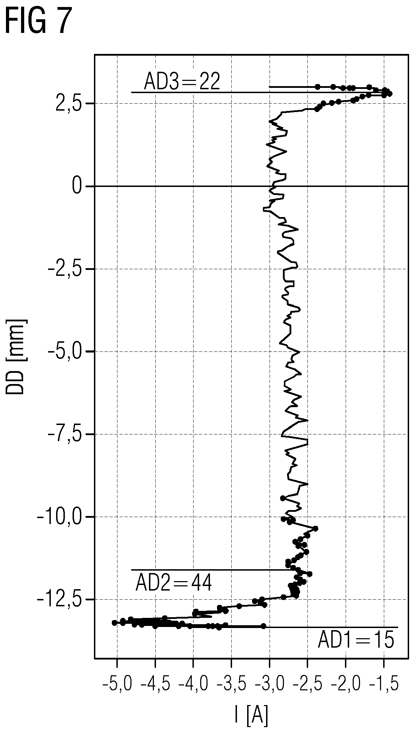

**Fig. 6** und **Fig. 7** zeigen zeitliche Verläufe einer Stromaufnahme I der Maschine in Abhängigkeit der Bohr-Tiefe DD (engl. "drilling depth").

Es sind jeweils Anomalie-Dichten AD1-AD3 eingezeichnet, welche als Kriterium zur Detektion einer Anomalie herangezogen werden können.

Die Anomalie-Dichten AD1-AD3 können aus prognostizierten Schätz-Werten oder Anomalie-Werten, aber auch aus geglätteten Anomalie-Verläufen abgeleitet werden.

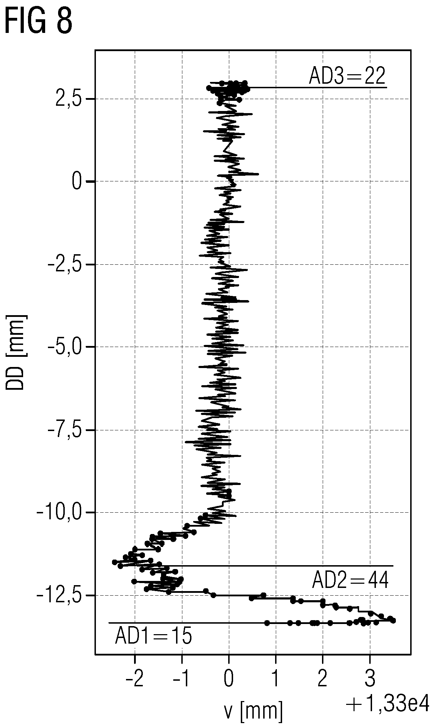

**Fig. 8** zeigt einen Verlauf der Verschub-Geschwindigkeit in Abhängigkeit der Bohr-Tiefe.

Es sind wiederum Anomalie-Dichten AD1-AD3 eingezeichnet.

### Bezugszeichenliste:

- AD1-AD3: Anomalie-Dichte
- ADM: Anomalie-Detektions-Modul
- APP: Anwendungsprogramm mit künstlicher Intelligenz auf Rechenvorrichtung
- AS: zeitdiskreter Anomalie-Wert, "anomaly score"
- AUXM: Hilfsdaten-Modul, "auxiliary data module"
- CF: Schneide-Kraft, "cutting force"
- CON: Kontrollsystem, "control system"
- CS: Schneide-Geschwindigkeit, "cutting speed"
- DD: Bohrtiefe, "drilling depth"
- DM: Entscheidungsmodul, "desicion module"
- EPF: Rechenvorrichtung, "edge platform"
- F1-F4: geschätzter Wert
- FCM: Schätz-Modul, "forecasting module"
- K1, K2: Kennzahl, "key performance indicator", KPI
- M1, M2: gemessenen Wert
- MEM: Speicher-Modul
- O1-O4: Ausgangswert
- OM, OM1-OM4: Ausgangs-Modul
- OPH: Wert für Betriebsstunden, "operation hours"
- P1, P2: prognostizierter Wert
- RUL: Wert für "sinnvolle Restzeit", "remaining useful life"
- S1-S4: Eingangssignale
- SM: Sensor-Modul
- SM1-SM4: Sensor-Mittel
- SS: geglätteter Anomalie-Wert, "smootheded score"
- TH_{CF}, TH_{CS}, TH_{OPH}: Schwellwert
- v: Geschwindigkeit

## Patentansprüche

1. Verfahren zum Betrieb einer Maschine mit einem Werkzeug, **dadurch gekennzeichnet, dass** folgende Schritte ausgeführt werden:
a) Erfassen zumindest eines Betriebs-Datenpunktes (S1-S4) bezüglich der Maschine und/oder des Werkzeugs,
b) Berechnen zumindest eines Schätz-Werts (F1-F4) aus dem zumindest einen Betriebs-Datenpunkt (S1-S4) auf Basis eines ML-Modells,
c) Bestimmen einer Anomalie in Form eines zeitdiskreten Anomalie-Werts (AS) auf Basis des zumindest einen Schätz-Werts (F1-F4) durch einen Vergleich mit einem vorbestimmten Vergleichswert für die zumindest eine Schätzung und Erkennung einer Übereinstimmung des Schätz-Vergleichs,
d) Speichern des zeitdiskreten Anomalie-Werts (AS) in einem Speicher und aggregieren des zeitlichen Verlaufs des Anomalie-Werts (AS) zu einem geglätteten Anomalie-Wert (SS),
e) Vergleichen des geglätteten Anomalie-Werts (SS) mit zumindest einem vorbestimmten Vergleichswert für die Anomalie und Erkennung einer Übereinstimmung des Anomalie-Vergleichs,
f) Ausgeben einer Steueroperation (O1-O4) auf Basis des geglätteten Anomalie-Werts (SS) an die Maschine.

2. Verfahren nach dem vorhergehenden Anspruch, wobei zumindest zwei Betriebs-Datenpunkte (S1-S4) erfasst und weiterverarbeitet werden.

3. Verfahren nach dem vorhergehenden Anspruch, wobei zumindest zwei Schätz-Werte (F1-F4) berechnet und weiterverarbeitet werden.

4. Verfahren nach einem der vorhergehenden Ansprüche, wobei der zumindest eine Betriebs-Datenpunkt (S1-S4) eine Dreh- oder Verschiebe-Geschwindigkeit, ein Drehmoment, eine Stromaufnahme oder eine Temperatur ist.

5. Verfahren nach einem der vorhergehenden Ansprüche, wobei der zumindest eine Schätz-Wert (F1-F4) mittels eines LSTM-Netzwerks berechnet wird.

6. Verfahren nach einem der vorhergehenden Ansprüche, wobei der zeitdiskrete Anomalie-Wert (AS) mittels eines "isolation forest"-Algorithmus bestimmt wird.

7. Verfahren nach einem der vorhergehenden Ansprüche, wobei der geglätteten Anomalie-Wert (SS) durch Bilden eines zeitlichen Mittelwerts erfolgt.

8. Verfahren nach einem der vorhergehenden Ansprüche, wobei der Vergleichswert im Schritt e) durch ein Verfahren ermittelt wird, welches auf dem maschinellen Lernen beruht, wie ein Entscheidungs-Baum, ein Bayes-Netzwerk, ein neuronales Netzwerk, eine Multi-Class-Support-Vector-Maschine oder eine k-Nearest-Neighbor-Klassifikation.

9. Verfahren nach einem der vorhergehenden Ansprüche, wobei zumindest eine Betriebs-Kennzahl (K1, K2) beim Vergleich im Schritt f) berücksichtigt werden.

10. Vorrichtung zum optimalen Betrieb einer Maschine mit einem Werkzeug, **gekennzeichnet durch**
ein Sensor-Modul (SM) mit zumindest einem Sensor-Mittel (SM1-SM4) zur Ausführung des Schritts a),
ein Schätz-Modul (FCM) zur Ausführung des Schritts b), ein Anomalie-Detektions-Modul (ADM) zur Ausführung des Schritts c),
ein Speicher-Modul (MEM) zum Speichern im Schritt d),
ein Entscheidungsmodul (DM) zur Ausführung des Schritts e), und ein Ausgangs-Modul (OM, OM1-OM4) zur Ausführung des Schritts f),
und die Vorrichtung dazu eingerichtet ist, das Verfahren nach einem der vorhergehenden Ansprüche auszuführen.

11. Vorrichtung nach dem vorhergehenden Anspruch, ferner umfassend ein Hilfsdaten-Modul (AUXM), welches bei der Ausführung des Schritts nach Anspruch 9 angewandt wird.

12. Vorrichtung nach den Ansprüchen 10 oder 11, wobei das Schätz-Modul (FCM), das Anomalie-Detektions-Modul (ADM), das Speicher-Modul (MEM) und das Entscheidungsmodul (DM) auf einer Edge gelegen sind.
